## Europäisches Patentamt
## European Patent Office
## Office européen des brevets

(19)

(11) Veröffentlichungsnummer: **0 193 015**
**A2**

## (12) EUROPÄISCHE PATENTANMELDUNG

(21) Anmeldenummer: **86101649.1**

(22) Anmeldetag: **08.02.86**

(51) Int. Cl.⁴: **G 01 N 27/07**

(30) Priorität: **26.02.85 CH 872/85**

(43) Veröffentlichungstag der Anmeldung:
**03.09.86 Patentblatt 86/36**

(84) Benannte Vertragsstaaten:
**CH DE FR GB LI SE**

(71) Anmelder: **Novasina AG**
**Thurgauerstrasse 50**
**CH-8050 Zürich(CH)**

(72) Erfinder: **Horn, Petr, Dr.**
**Birchstrasse 159**
**CH-8156 Oberhasli(CH)**

(74) Vertreter: **Eschmann, Heinz et al,**
**A. Braun, Braun, Héritier, Eschmann AG Patentanwälte**
**Holbeinstrasse 36-38**
**CH-4051 Basel(CH)**

(54) Sensor zur Messung der elektrischen Leitfähigkeit.

(57) Auf einem Substrat sind in Form von Leiterbahnen wenigstens zwei mit mindestens je einer Zuleitung (5) versehene Elektroden (1,2) aufgebracht. Die Zuleitungen (5) können aus einem Material mit einem tieferen Normalpotential als demjenigen der Elektroden (1, 2) gefertigt sein. Ein Dielektrikum (6) deckt die Elektrodenenden und – bis zu den Kontaktstellen (4) – die Zuleitungen (5) ab. Die Elektroden (1,2) können je nach Bedarf als Heizelektrode und/oder als Temperaturfühler ausgebildet und verwendbar sein. Ferner können die Elektroden auf einer Seite oder auch auf beiden Seiten der Substratplatte (7) angeordnet sein.

EP 0 193 015 A2

Croydon Printing Company Ltd.

./...

Fig. 1

## Sensor zur Messung der elektrischen Leitfähigkeit

Die vorliegende Erfindung betrifft einen Sensor zur Messung der elektrischen Leitfähigkeit mit wenigstens zwei hitze- und/oder korrosionsbeständigen, mit Zuleitungen versehenen, beabstandeten Elektroden.

In verschiedenen Fällen können Sensoren zur Messung der elektrischen Leitfähigkeit hohen Temperaturen und/oder korrosiver Umgebung ausgesetzt sein. Für Vorrichtungen zur Ueberwachung von Verbrennungsvorgängen trifft beispielsweise beides zu. Sie müssen nebst hohen Abgastemperaturen auch heissen Schwefelsäuredämpfen, Stickoxiden usw. widerstehen können.

In der DE-PS 26 31 027 C3 ist eine Vorrichtung zum Nachweis fester oder flüssiger Substanzen bei unvollständiger Verbrennung eines Brennstoffes beschrieben, bei welcher die Menge der niedergeschlagenen Substanzen mittels eines Sensors gemessen wird. Der Sensor enthält überdies ein Heizelement zur pyrolytischen Selbstreinigung nach einem Messvorgang. Dieser Sensor hat den Nachteil, dass dessen Herstellung aufwendig ist und dass er verhältnismässig viel Platz beansprucht. Ausserdem wird zur Aufheizung eines solchen Sensors aufgrund seiner grossen Masse sehr viel Energie benötigt.

Die Erfindung, wie sie in den Ansprüchen gekennzeichnet ist, löst die Aufgabe, einen Sensor zur Messung der elektrischen Leitfähigkeit zu schaffen, der wenig Platz beansprucht, im Bedarfsfalle mit verhältnismässig bescheidenem Energiebedarf aufheizbar und kostengünstig herzustellen ist.

Im folgenden wird die Erfindung anhand einer Zeichnung beispielsweise näher erläutert. Es zeigen:

Fig. 1 einen Sensor mit Elektroden auf einer Seite der Substratplatte

Fig. 2 einen Sensor mit Elektroden auf beiden Seiten der Substratplatte

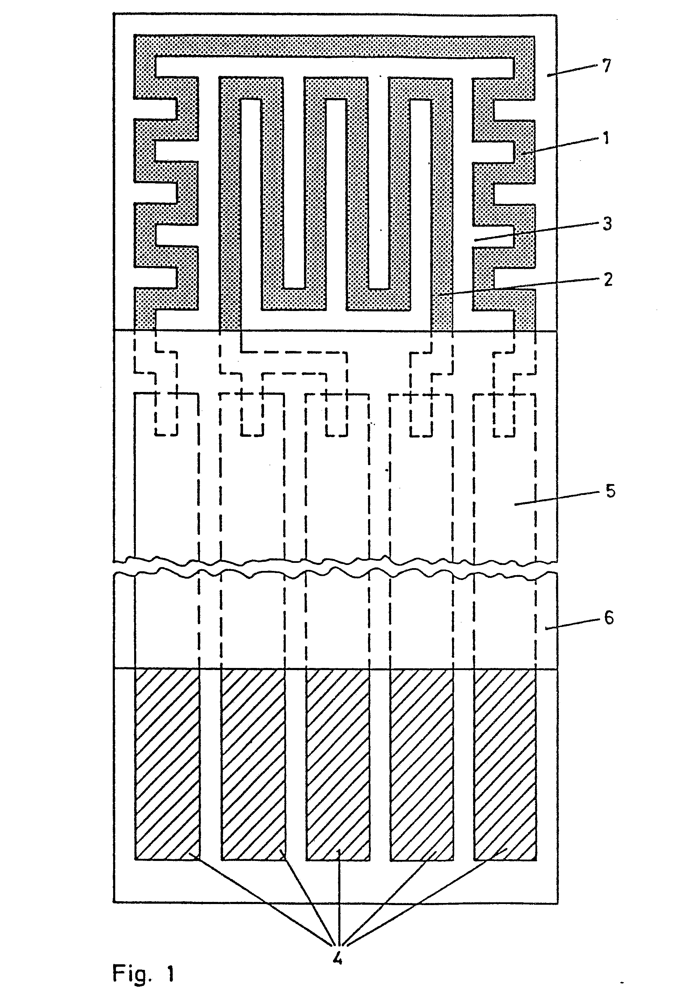

Der Sensor gemäss Fig. 1 weist zwei Elektroden 1 und 2 auf, welche in Form von Leiterbahnen auf eine keramische Substratplatte 7 aufgebracht sind. Zwischen den Elektroden 1 und 2 liegt die Messfläche 3. Ueber die Elektrodenenden und diese überlappend sind Zuleitungen 5 aufgebracht. Diese sind bis auf die als Kontaktstellen 4 dienenden Enden der Zuleitungen 5 mit einem Dielektrikum 6 überdeckt. Damit bestimmt das Dielektrikum 6 die zur Leitfähigkeitsmessung dienende Messfläche 3. Auf diese Weise ist es möglich, für alle Sensoren eine genau reproduzierbare Messfläche 3 herzustellen.

Zwischen den Elektroden 1 und 2 wird die elektrische Leitfähigkeit der auf der Messfläche 3 vorhandenen Substanz gemessen. Die elektrische Leitfähigkeit eines Materials ist von dessen Temperatur abhängig.

Mit der als Temperaturfühler ausgebildeten, inneren Elektrode 2 kann diese laufend gemessen werden. Eine zur Temperaturmessung vorgesehene Elektrode kann mit einer 2-, 3- oder 4-Draht-Zuleitung versehen werden. Die in Fig. 1 dargestellte Ausführungsform ermöglicht eine Temperaturmessung nach dem Prinzip der 3-Draht-Zuleitung. Die äussere Elektrode 1 ist mit zwei Zuleitungen 5 versehen und als Heizelektrode verwendbar. Mit der Elektrode 1 kann die Temperatur des Sensors variiert und damit eine Thermoanalyse der Messsubstanz durchgeführt werden. Hierbei wird die Temperatur langsam gesteigert und der elektrische Leitwert der Substanz in Funktion der Temperatur gemessen. Anhand einer Thermoanalyse können beispielsweise bei einer Oelfeuerung folgende Betriebszustände festgestellt werden:

- Unterschreitung des Wassertaupunktes
- Unterschreitung des Säuretaupunktes
- Russ
- Oelrückstände im Abgas

Mit Hilfe der Heizelektrode 1 kann ferner der Sensor so stark aufgeheizt werden, dass die auf ihm vorhandenen Substanzen vollständig verbrennen. Dieser Vorgang wird als Selbstreinigung bezeichnet. Sowohl bei der Thermoanalyse als auch bei der Selbstreinigung kann die Temperatur mit der inneren, drei Zuleitungen 5 aufweisenden Elektrode 2 laufend überwacht werden.

Eine Messung von Verbrennungsvorgängen kann wie folgt durchgeführt werden:

Der Sensor wird den Verbrennungsabgasen ständig ausgesetzt. Zu diesem Zweck wird er beispielsweise in einem Kamin oder in einem Auspuffrohr befestigt. Wenn die zu überwachende Einrichtung in Betrieb ist, wird die elektrische Leitfähigkeit jeweils während einer gewissen Zeitdauer, welche als Referenzzeit bezeichnet wird, laufend überwacht. Nach Ablauf einer vorgegebenen Zeitdauer wird die Selbstreinigung eingeleitet. Die Selbstreinigung erfolgt aber schon vorher, wenn ein vorgegebenes Minimum der Leitfähigkeit unterschritten wird. In diesem Falle wird zusätzlich ein Alarmsignal ausgelöst.

Die Elektroden 1, 2 werden in Form von Leiterbahnen auf eine keramische Substratplatte 7 im Dünnschicht- und/oder Dickschicht-Verfahren aufgebracht. Die Substratplatte 7 besteht vorzugsweise zu mehr als 95 % aus Aluminiumoxyd. Als Substratmaterialien kommen aber auch beispielsweise Berylliumoxyd, Porzellan oder emaillierte Stahlsubstrate in Betracht. Um den hohen Temperaturen und der korrosiven Umgebung widerstehen zu können, besteht das Elektrodenmaterial aus edlem Metall oder aus einer hochwertigen Legierung. Je edler ein Metall bzw. je hochwertiger eine Legierung desto höher ist das entsprechende Normalpotential. Als hervorragend geeignetes Elektrodenmaterial hat sich Platin erwiesen. Ferner eignen sich Platin-Gold-Legierungen, Titan, Wolfram, Vanadium u.a.m.. Insbesondere bei der Selbstreinigung entstehen hohe Temperaturen. Mit den für konventionelle Schaltungstechnik üblicherweise verwendeten Materialien kann daher nicht gearbeitet werden. Der Temperaturabbau geschieht über entsprechend lange, ebenfalls auf die Substratplatte 7 aufgebrachte Zuleitungen 5. Die Elektroden 1, 2 werden im Bereiche der Heizelektrode 1 im Selbstreinigungsverfahren regelmässig gereinigt. Dies ist jedoch für Zuleitungen 5 nicht möglich, Hier können sich im Laufe der Zeit Verschmutzungen ansammeln. Durch derartige Verschmutzungen entstehen Kriechströme, welche die Messungen verfälschen können. Deshalb sind die Zuleitungen mit einem hitze- und korrosionsbeständigen Dielektrikum 6 abgedeckt, wie es z.B. in der Dickschichttechnik verwendet wird. Die Zusammensetzung des Dielektrikums 6 ist bei jedem Hersteller etwas verschieden und gehört zu dessen Know-How. Sämtliche dielektrische Materialien können verwendet werden, die mit dem Material für die Zuleitungen kompatibel sind und auf diesem haften bleiben, und die bei einer tieferen Temperatur als der Einbrenntemperatur des Leitermaterials eingebrannt werden können.

Die Zuleitungen 5 könnten ebenfalls wie die Elektroden 1, 2 aus Platin bestehen. Platin hat aber den Nachteil, dass es einerseits sehr teuer und andererseits schwierig zu kontaktieren ist. So kann Platin nicht gebondet werden. Mikroschweissen erfordert eine wesentlich dickere Platinschicht als dies für Messzwecke nötig wäre. Dadurch würde die Herstellung des Sensors stark verteuert. Kritisch ist die Kontaktierung von Platin besonders dann, wenn die Kontaktstellen Vibrationen ausgesetzt sind, wie sie beispielsweise bei Oelbrennern und Verbrennungsmotoren auftreten. Als günstige Lösung hat sich erwiesen, die Zuleitungen 5 aus Silberpalladium herzustellen. Silberpalladium ist wesentlich billiger als Platin. Es kann ebenfalls hohen Temperaturen ausgesetzt werden. Allerdings ist es nicht korrosionsbeständig. Doch sind die Zuleitungen 5 durch das Dielektrikum 6 gegen Korrosion geschützt. Als weitere Materialien für die Zuleitungen kommen Platin-Silber-Legierungen, Platin-Palladium-Silber-Legierungen, Platin-
Gold-Silber-Legierungen und Palladium-Gold-Legierungen
in Betracht.

Der Sensor kann in folgenden Arbeitsgängen hergestellt werden:

In einem ersten Arbeitsgang werden die Elektroden 1,
2 auf die Substratplatte 7 in einem Dünnschicht- und/
oder Dickschicht-Verfahren aufgebracht.

In einem zweiten Arbeitsgang werden die Zuleitungen 5
im Dickschicht-Verfahren aufgebracht. Die Zuleitungen
5 überlappen die Elektrodenanschlüsse, damit eine gute
Kontaktierung gewährleistet ist. Die Temperatur, bei
welcher die Zuleitungen 5 eingebrannt werden, liegt
unter dem Schmelzpunkt des Elektrodenmaterials.

In einem dritten Arbeitsgang wird das Dielektrikum 6
aufgebracht. Es wird bei einer Temperatur eingebrannt,
die unter dem Schmelzpunkt von Silberpalladium liegt.
Das Dielektrikum 6 überdeckt die Ueberlappungsstellen
der Zuleitungen 5 mit den Elektrodenanschlüssen. Die
auf der den Elektroden 1 und 2 entgegengesetzten Seite
liegenden Enden der Zuleitungen 5 werden als Kontaktstellen 4 freigelassen.

In einem vierten Arbeitsgang können die Kontaktstellen
4 zur besseren Lötbarkeit verzinnt werden. Durch die
Verzinnung sind sie überdies noch gegen Oxydation geschützt.

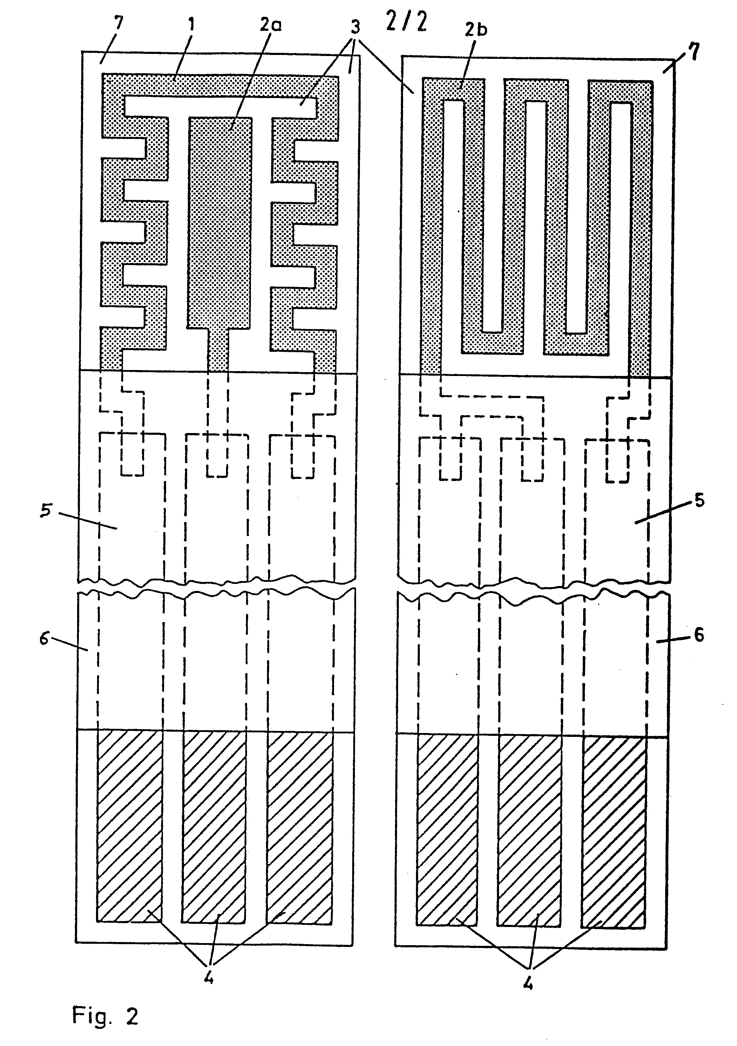

In der Fig. 2 ist links die Vorderseite und rechts die
Rückseite einer weiteren Ausführungsvariante eines erfindungsgemässen
Sensors dargestellt. Der hier gezeigte Sensor unterscheidet
sich von demjenigen gemäss Fig. 1 dadurch, dass mit Zuleitungen
5 versehene Elektroden 1, 2a, 2b, sowie Dielektrikum 6
und Kontaktstellen 4 auf beiden Seiten der Substratplatte 7 vorgesehen sind. Die mit zwei Zuleitungen 5 versehene Heizelektrode 1, die gleichzeitig als Elektrode zur Messung der elektrischen Leitfähigkeit dient, umgibt eine Gegenelektrode 2a. Als weitere Gegenelektrode dient der mit drei Zuleitungen 5 versehene, auf der Rückseite aufgebrachte Temperaturfühler 2b. Die Messfläche 3 führt infolgedessen auch über die die Elektroden 1, 2b umgebenden Kanten der Substratplatte 7. Dies hat den Vorteil, dass ein mit Abgasen zu beaufschlagender Sensor mit einer seitlichen Kante gegen den Abgasstrom gerichtet werden kann. Dadurch kann die abrasive Wirkung, welche herumfliegende, feste Partikel (beispielsweise Eisenoxyd) auf die Leiterbahnen ausüben, stark vermindert werden. Die elektrische Leitfähigkeit der sich in den Randzonen und auf der Kante ablagernden Verschmutzung kann zwischen den Elektroden 1 und 2b gemessen werden. Es kann aber auch, wie bei der in Fig. 1 gezeigten Ausführungsform, die Vorderfläche gegen den Abgasstrom gerichtet und die elektrische Leitfähigkeit zwischen den Elektroden 1 und 2a gemessen werden.

Ein weiterer Vorteil der in Fig. 2 gezeigten Anordnung besteht darin, dass die Zuleitungen 5 auf zwei Seiten verteilt sind. Dies erlaubt eine beträchtliche Reduktion der Breite eines Sensors.

In einer stark vereinfachten Ausführungsform könnte ein Sensor gebaut werden, der nur auf einer Seite Elektroden 1, 2a aufweist, die entsprechend der Vorderseite gemäss Fig. 2 ausgestaltet sind. Mit der Heizelektrode 1 könnte alternierend auch die Temperatur gemessen werden. Das würde zwar nicht eine so genaue Temperaturmessung erlauben wie mit einem 3-Draht-Temperaturfühler, doch könnte dies in verschiedenen Fällen genügen. Es könnte aber auch hier ein 3-Draht- oder 4-Draht-Anschluss vorgesehen werden.

In der einfachsten Ausführungsform, bei der es keiner Aufheizung und keiner Temperaturmessung bedarf, könnten auch bloss zwei Elektroden, mit je einer Zuleitung und je einem Kontakt entweder gemeinsam auf einer Substratseite oder gegenüberliegend auf je einer Substratseite vorgesehen werden.

E

Patentansprüche

1. Sensor zur Messung der elektrischen Leitfähigkeit mit wenigstens zwei hitze- und/oder korrosionsbeständigen, mit Zuleitungen versehenen, beabstandeten
Elektroden, dadurch gekennzeichnet, dass die Elektroden
(1, 2, 2a, 2b) mit mindestens je einer Zuleitung (5)
versehen sind, dass die Elektroden (1, 2, 2a, 2b) und
die Zuleitungen (5) in Form von Leiterbahnen auf einem
isolierenden, hitze- und/oder korrosionsbeständigen Substrat (7) aufgebracht sind, und dass die Zuleitungen (5)
- ausser bei den Kontaktstellen (4) - mit einem hitze-
und/oder korrosionsbeständigen Dielektrikum (6) abgedeckt sind.

2. Sensor nach Anspruch 1, dadurch gekennzeichnet, dass die Elektroden (1, 2, 2a, 2b) und die Zuleitungen (5) aus verschiedenen Materialien aufgebaut
sind, wobei das Elektrodenmaterial ein höheres Normalpotential als das Material der Zuleitungen (5) aufweist.

3. Sensor nach einem der Ansprüche 1 oder 2, dadurch gekennzeichnet, dass die Elektroden (1, 2, 2a, 2b) aus Platin bestehen.

4. Sensor nach Anspruch 1 bis 3, dadurch gekennzeichnet, dass das Substrat (7) zu mehr als 95 % aus Aluminiumoxyd aufgebaut ist.

5. Sensor nach einem der Ansprüche 3 oder 4, dadurch gekennzeichnet, dass die Zuleitungen (5) aus Silberpalladium bestehen.

6. Sensor nach Anspruch 5, dadurch gekennzeichnet, dass die Zuleitungen verzinnte Kontaktstellen (5) aufweisen.

7. Sensor nach einem der Ansprüche 1 bis 6, dadurch gekennzeichnet, dass wenigstens eine Elektrode (2b) auf der anderen Seite der Substratplatte (7) als die übrigen Elektroden (1, 2a) angeordnet ist.

8. Sensor nach einem der Ansprüche 1 bis 7, dadurch gekennzeichnet, dass eine der beiden Elektroden (1, 2, 2a, 2b) wenigstens zwei Zuleitungen (5) aufweist und als Heizelektrode und/oder als Temperaturfühler verwendbar ist.

9. Sensor nach einem der Ansprüche 1 bis 7, dadurch gekennzeichnet, dass eine Elektrode (1) zwei Zuleitungen (5) aufweist und als Heizelement und eine andere Elektrode (2, 2b) wenigstens zwei Zuleitungen (5) aufweist und als Temperaturfühler verwendbar ist.

10. Verfahren zur Herstellung des Sensors nach einem der Ansprüche 2 bis 7, dadurch gekennzeichnet, dass in einem ersten Arbeitsgang die Elektroden (1, 2, 2a, 2b) auf das Substrat (7) aufgebracht werden, dass in einem zweiten Arbeitsgang die Zuleitungen (5) auf das Substrat aufgebracht und bei einer unter dem Schmelzpunkt der Elektroden (1, 2, 2a, 2b) liegenden Temperatur eingebrannt werden und dass schliesslich in einem dritten Arbeitsgang das Dielektrikum (6) auf die Substratplatte (7) aufgebracht und bei einer unter dem Schmelzpunkt der Zuleitungen (5) liegenden Temperatur eingebrannt wird.

E

0193015

Fig. 1

Fig. 2